# EUROPÄISCHE PATENTSCHRIFT

(11) **EP 1 554 121 B1**
(45) Veröffentlichungstag und Bekanntmachung des Hinweises auf die Patenterteilung: **11.08.2010**
(21) Anmeldenummer: 03732543.8
(22) Anmeldetag: 06.06.2003
(51) Int. Cl.: B41F 17/22

(54) **VORRICHTUNG ZUR OBERFLÄCHENBEARBEITUNG VON TEILEN**
DEVICE FOR MACHINING THE SURFACE OF PARTS
DISPOSITIF DE TRAITEMENT DE SURFACE DE PIECES

(30) Priorität: 14.06.2002 DE 10226500
(43) Veröffentlichungstag der Anmeldung: 20.07.2005
(73) Patentinhaber: Ball Packaging Europe Holding GmbH & Co. KG, 40880 Ratingen (DE)
(72) Erfinder: VETTER, Thomas, 73547 Lorch (DE); NOLL, Werner, 56412 Huebingen (DE); KREUTZ, Patrick, 56072 Koblenz (DE)
(74) Vertreter: Eisenführ, Speiser & Partner
(86) Internationale Anmeldenummer: PCT/EP2003/005958
(87) Internationale Veröffentlichungsnummer: WO 2003/106177

(56) Entgegenhaltungen:
- WO-A-01/12440
- CH-A- 501 335
- DE-A- 3 729 911
- DE-A- 19 617 355
- DE-A- 19 807 924
- US-A- 5 193 456
- PATENT ABSTRACTS OF JAPAN vol. 1996, no. 12, 26. Dezember 1996 (1996-12-26) -& JP 08 207265 A (CANON ELECTRON INC), 13. August 1996 (1996-08-13)

## Beschreibung

Die Erfindung betrifft eine Vorrichtung gemäß dem Oberbegriff des Anspruchs 1.

Derartige Vorrichtungen können allgemein zur Oberflächenbehandlung von Teilen in Form von Lackierprozessen, Prägeprozessen, Oberflächenveredelungsprozessen, Laserbearbeitungsvorgängen und dergleichen dienen.

Insbesondere können derartige Vorrichtungen zur Bedruckung von Teilen dienen. Dabei kann die Fördereinheit generell derart ausgebildet sein, dass mit dieser durch geeignete Translations- und/oder Rotationsbewegungen die Teile der einzelnen Bearbeitungsstationen zugeführt werden.

Bei der Bedruckung von rotationssymmetrischen Teilen wie zum Beispiel Getränkedosen werden diese auf einem Rundtaktapparat positioniert und mit diesem den einzelnen Bearbeitungsstationen zugeführt. Damit die so an die Bearbeitungsstationen herangeführten Getränkedosen in der jeweils gewünschten Lage zur Bearbeitungsstation platziert werden können, sind die Getränkedosen auf drehbaren Halterungen angeordnet. Die Halterungen sind an einen Antrieb gekoppelt, mittels dessen die Getränkedosen um ihre Längsachse gedreht werden können.

Zur Erfassung der Drehpositionen der Getränkedosen sind an den Halterungen Inkrementalgeber angeordnet. Die von den Inkrementalgebern generierten Signale werden an die Bearbeitungsstationen übertragen, so dass diese in Abhängigkeit der Signale gesteuert werden können.

Nachteilig hierbei ist zum einen, dass die Übertragung der Signale mit einem unerwünscht hohen Aufwand verbunden ist, da die Signale der Inkrementalgeber von den mit dem Rundtaktapparat mit rotierenden Halterungen jeweils an die stationären Bearbeitungsstationen übertragen werden müssen.

Dabei ergibt sich als weiterer gravierender Nachteil, dass bedingt durch die Übertragungwege die Signale der Inkrementalgeber mit Verzögerungen behaftet in die Bearbeihrngsstationen eingelesen werden und zudem Schwankungen unterworfen sind.

Damit entstehen unerwünschte Ungenauigkeiten bei der Durchführung der Bearbeitungsprozesse in den einzelnen Bearbeitungsstationen. Dies wiederum führt zu einer nicht zufriedenstellenden Qualität der Oberflächenbearbeitung der Teile.

Die internationale Veröffentlichung WO01/12440A1 offenbart ein System zur Bedruckung von konischen Artikeln. Zur Steuerung der Bedruckung offenbart die WO01/12440A1 grundsätzlich die Verwendung von Signalen, welche von einem zentralen Controller an die Servomotoren der Antriebe der Bedruckungseinheiten sowie von Fördereinrichtungen verwendet. Diese Signale werden generiert durch Informationen, welche diverse Sensoren von einzelnen Positionen des Systems an den Controller zurückmelden. Nähere Ausgestaltungen des Signals oder der Art und Weise der Signalübertragung sind der WO01/12440A1 nicht zu entnehmen. Auch bei einem System gemäß der WO01/12440A1 ist es nachteilig, dass die Übertragung der Signale mit einem unerwünscht hohen Aufwand verbunden ist, da die Signale an jeden Servomotor einzeln und mit komplexem Inhalt gesendet werden müssen. Die daraus resultierenden möglichen Verzögerungen in der Signalübertragung, bzw. Signalverarbeitung führen wiederum zu einer nicht zufriedenstellenden Qualität der Oberflächenbearbeitung der Artikel.

Der Erfindung liegt die Aufgabe zugrunde, eine Vorrichtung der eingangs genannten Art bereitzustellen, mit welcher eine reproduzierbare Qualität der Oberflächenbearbeitung von Teilen erhalten wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung zur Oberflächenbearbeitung von Teilen weist eine vorgegebene Anzahl von Bearbeitungsprozessen durchführenden Bearbeitungsstationen und eine Bearbeitungsbewegungen ausführende. Fördereinheit auf, mittels derer die Teile in vorgegebene Sollpositionen an den Bearbeitungsstationen transportiert werden. In einer zentralen Steuereinheit werden die Bearbeitungsbewegungen der Fördereinheit und die Bearbeitungsprozesse der Bearbeitungsstation synchronisiert, in dem über die zentrale Steuereinheit für jede Bearbeitungsstation ein mit der Bearbeitungsbewegung des zu bearbeitenden Teils korrelierter, den jeweiligen Bearbeitungsprozess steuernder Takt vorgebbar ist.

Der Grundgedanke der Erfindung besteht somit darin, über die zentrale Steuereinheit die Bearbeitungsstationen auf die Bearbeitungsbewegungen der Fördereinheit zu synchronisieren. Damit wird nicht nur der Aufwand der Informationsübertragung zwischen den Bearbeitungsstationen und der Fördereinheit reduziert. Vielmehr wird über die zentrale Vorgabe des Taktes über die zentrale Steuereinheit auch eine exakte Ansteuerung der Bearbeitungsstationen ermöglicht. Ungenauigkeiten infolge unterschiedlicher Übertragungszeiten der Positionswerte werden weitgehend eliminiert. Weiterhin werden über die zentrale Steuereinheit durch Generierung geeigneter Startsignale und Vorgabe der Dauer der Übertragung des Taktes an eine Bearbeitungsstation der Beginn und die Dauer des dort durchgeführten Bearbeitungsprozesses exakt vorgegeben.

Die erfindungsgemäße Vorrichtung kann generell zur Durchführung verschiedener Oberflächenbearbeitungen von Teilen durchgeführt werden.

Besonders vorteilhaft wird die erfindungsgemäße Vorrichtung zur Bedruckung rotationssymmetrischer Teile eingesetzt, die auf einem Rundtaktapparat den Bearbeitungsstationen zugeführt werden und dabei zudem um ihre Symmetrieachsen drehbar gelagert sind.

Erfindungsgemäß wird in der zentralen Steuereinheit als Takt eine Leitfrequenz generiert, mittels derer nicht nur die Bearbeitungsstationen sondern auch die Fördereinheit, insbesondere die Antriebe für die Durchführung der Drehbewegungen der Teile bevorzugt auf einem Rundtaktapparat, angesteuert werden. Durch diese Vorgabe der Leitfrequenz wird eine besonders einfache und exakte Synchronisierung der Bearbeitungsstationen und der Elemente der Fördereinheit erhalten.

In einer vorteilhaften Ausführungsform der Erfindung wird in der zentralen Steuereinheit für jede Bearbeitungsstation ein individueller Takt generiert. Dabei wird dieser Takt aus den aktuell erfassten Positionswerten und Erfassungszeiten der Zuführleitung des jeweils zu bearbeitenden Teils abgeleitet.

Im Falle einer als Rundtaktapparat ausgebildeten Fördereinheit werden als Positionswerte mittels Inkrementalgebern die aktuellen Drehpositionen der auf den Rundtaktapparat drehbar gelagerten rotationssymmetrischen Teile erfasst. Die dabei generierten Signale der Inkrementalgeber werden jedoch nicht direkt an die Bearbeitungsstationen zu deren Steuerung übertragen. Vielmehr wird aus den Positionswerten und den Erfassungszeiten der Positionswerte in der zentralen Steuereinheit der Takt für jeweils eine Bearbeitungsstation generiert. Der so gebildete Takt berücksichtigt insbesondere auch Schwankungen der Drehbewegungen des jeweils zu bearbeitenden Teils, wodurch mit diesem Takt eine exakte Ansteuerung der Bearbeitungsstation ermöglicht wird.

Weiterhin können Schwankungen und Positionierfehler der Bewegung des Rundtaktapparates kompensiert werden. Zudem können Fertigungstoleranzen des Rundtaktapparates kompensiert werden.

Positionierfehler und Fertigungstoleranzen können durch geeignete Vorgaben von Startsignalen für den jeweiligen Takt kompensiert werden. Schwankungen der Bewegung des Rundtaktapparates während der Bearbeitung der Teile werden durch geeignete Vorgabe des Takts selbst kompensiert.

Besonders vorteilhaft werden derartige Fertigungstoleranzen in einem Kalibriervorgang erfasst, um den in der zentralen Steuereinheit generierten Takt möglichst optimal anzupassen, um diese Fertigungstoleranzen zu eliminieren.

Für den Fall einer als Rundtaktapparat ausgebildeten Fördereinheit und in Form von Bedruckungseinheiten ausgebildeten Bearbeitungsstationen kann der Kalibriervorgang wie folgt durchgeführt werden.

Auf drehbaren Halterungen des Rundtaktapparates werden rotationssymmetrische Referenzteile den einzelnen Bedruckungseinheiten zugeführt. Dabei werden alle Referenzteile sämtlichen Bedruckungseinheiten zugeführt, wobei dabei auf die Referenzteile jeweils geeignete Referenz-Strichmuster aufgedruckt werden. Anschließend erfolgt durch Analysieren der aufgedruckten Referenz-Strichmuster die Bestimmung der Fertigungstoleranz des Rundtaktapparates, insbesondere hinsichtlich der Rotationsbewegung des Rundtaktapparates. Im einfachsten Fall erfolgt die Analyse derart, das die rotationssymmetrischen Referenzteile aufgeschnitten werden. Dadurch lassen sich die Mantelflächen der Referenzteile in einer Ebene ausbreiten, so dass die dort aufgebrachten Referenz-Strickmuster mit einem Mikroskop ausgewertet werden können.

Der Takt kann insbesondere in Form von einer Folge von Zählimpulsen ausgebildet sein, welcher in einem Frequenzgenerator zur Ansteuerung der Bearbeitungsstation in Abhängigkeit von Steuerbefehlen der zentralen Steuereinheit generiert werden.

Die Ausgangssignale der Frequenzgeneratoren können in die zentrale Steuereinheit rückgelesen werden. Dort bilden diese Eingangsgrößen von Regelkreisen zur Generierung der Zählimpulse für die einzelnen Bearbeitungsstationen. Auf diese Weise können auch Schwankungen des Zyklus mit der zentralen Steuereinheit und bauteilbedingte Schwankungen der Ausgangssignale der Frequenzgeneratoren kompensiert werden.

Die Erfindung wird im Nachstehenden anhand der Zeichnungen erläutert. Es zeigen:
- Figur 1:: Schematische Darstellung eines Ausführungsbeispiels einer Vor- richtung zur Oberflächenbearbeitung von Teilen.
- Figur 2:: Blockschaltbild der Komponenten eines ersten Ausführungsbei- spiels der Steuerung für die Vorrichtung gemäß Figur 1.
- Figur 3:: Blockschaltbild der Komponenten eines zweiten Ausführungs- beispiels der Steuerung für die Vorrichtung gemäß Figur 2.

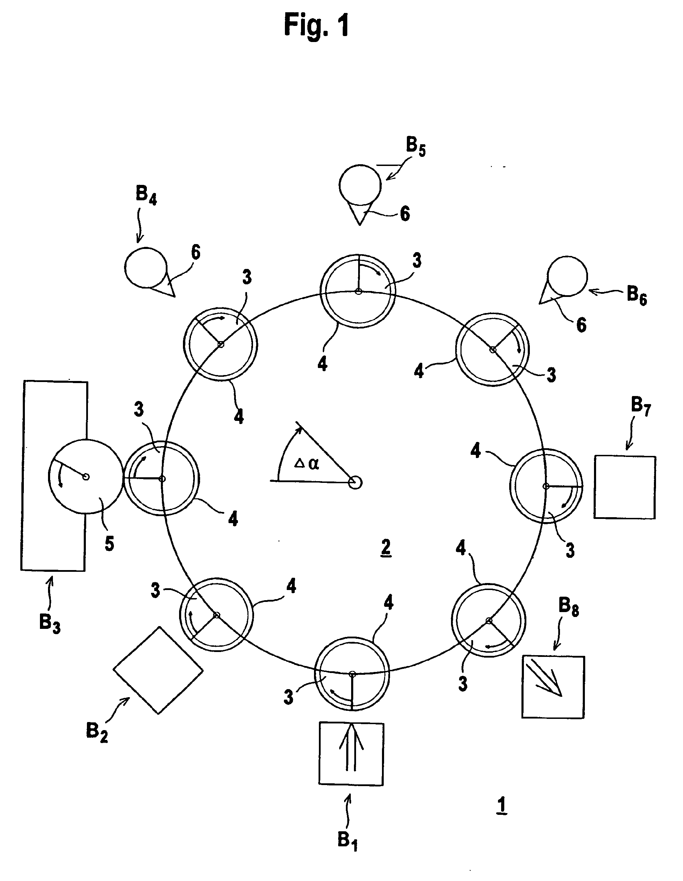

Figur 1 zeigt schematisch den Aufbau eines Ausführungsbeispiels einer Vorrichtung 1 zur Oberflächenbearbeitung von Teilen 3. Die Vorrichtung 1 weist eine Fördereinheit auf, mittels derer die Teile 3 unterschiedlichen Bearbeitungsstationen B₁-B₈ zugeführt werden.

Im vorliegenden Fall ist die Fördereinheit als Rundtaktapparat 2 ausgebildet, auf welchem in Umfangsrichtung äquistant insgesamt acht zu bearbeitende Teile 3 platziert sind. Entsprechend der Anzahl der auf dem Rundtakttisch platzierten Teile 3 sind insgesamt acht Bearbeitungsstationen B₁-B₈ vorgesehen, die in Umfangsrichtung des Rundtaktapparates 2 angeordnet sind. Über einen nicht dargestellten Förderantrieb wird der Rundtaktapparat 2 in WinkelSchritten Δα = 45° gedreht, wodurch simultan alle Teile 3 auf dem Rundtaktapparat 2 zur jeweils nächsten Bearbeitungsstation transportiert werden.

Die zu bearbeitenden Teile 3 sind im vorliegenden Fall rotationssymmetrisch ausgebildet und können beispielsweise von Getränkedosen, Bechern oder Getränkeflaschen gebildet sein. Die rotationssymmetrischen Teile 3 sind jeweils auf einer drehbar gelagerten Halterung 4 fixiert. Die Halterungen 4 werden mittels in der Figur 1 nicht dargestellter Antriebe angetrieben, so dass die Teile 3 jeweils eine Drehbewegung um ihre Symmetrieachse ausführen. Die Antriebe sind mit den jeweiligen Halterungen 4 fest verbunden und werden bei der Drehbewegung des Rundtaktapparates 2 mit diesem mitbewegt.

Im vorliegenden Fall dient die Vorrichtung 1 zur Bedruckung der auf dem Rundtaktapparat 2 geführten Teile 3. Dabei ist eine der Bearbeitungsstationen B₁ als Beladestation ausgebildet, über welche die Teile 3 dem Rundtaktapparat 2 zugeführt werden. Weiterhin ist eine der Bearbeitungsstationen B₈ als Entladestation ausgebildet, über welche die bearbeitenden Teile 3 wieder vom Rundtaktapparat 2 entnommen werden können.

Die in Förderrichtung des Rundtaktapparates 2 auf die Beladestation folgende Bearbeitungsstation B₂ ist von einer ersten Inspektionseinheit gebildet, mit welcher eine Vorinspektion der zu bearbeitenden Teile 3 durchgeführt wird. Besonders vorteilhaft ist die Inspektionsvorrichtung als Bildverarbeitungssystem ausgebildet.

In Förderrichtung des Rundtaktapparates 2 folgen auf die Inspektionseinheit vier als Bedruckungseinheiten B₃-B₆ ausgebildete Bearbeitungsstationen. Die erste Bedruckungseinheit B₃ arbeitet dabei nach einem berührenden Verfahren, beispielsweise einem Siebdruck-, Offsetdruck-, Flexodruck- oder Tiefdruckverfahren, und weist hierzu eine separate Druckwalze 5 auf, mittels derer Bedruckungen auf die Oberflächen der Teile 3 aufgebracht werden.

Die weiteren drei Bedruckungseinheiten B₄-B₆ arbeiten nach berührungslosen Verfahren. Dabei weisen diese jeweils einen nicht separat dargestellten Tintenstrahl-Druckkopf 6 auf. Vorzugsweise werden mit diesen Bedruckungseinheiten Druckmuster in unterschiedlichen Farben auf die Oberflächen der Teile 3 aufgebracht. Prinzipiell können auch Laserbearbeitungsvorrichtungen und dergleichen eingesetzt werden.

Schließlich ist als letzte Bearbeitungsstation B₇ vor der Entladestation eine weitere Inspektionseinheit zur Kontrolle der bearbeitenden Teile 3 vorgesehen. Vorteilhafterweise ist auch diese Inspektionsvorrichtung von einem Bildverarbeitungssystem gebildet.

Generell kann die Ausführung der Vorrichtung 1 hinsichtlich der Ausbildung, der Anzahl und der Anordnung der Bearbeitungsstationen B₁-B₈ am Rundtakttisch variieren. Entsprechend können anstelle von Rundtaktapparaten 2 auch andere Fördereinheiten wie zum Beispiel Linearförderer vorgesehen sein.

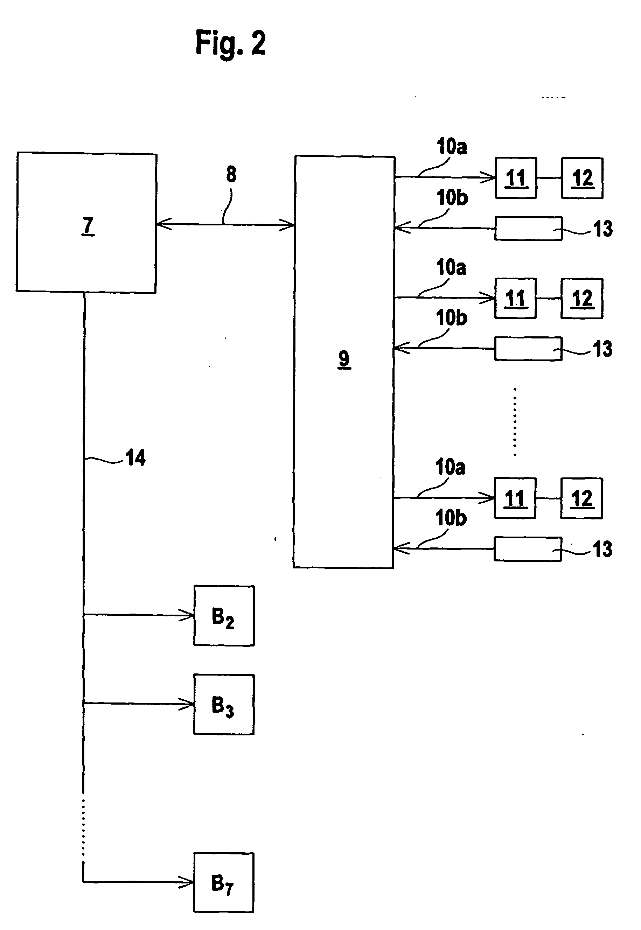

Figur 2 zeigt ein erstes Beispiel der Komponenten für die Steuerung der Vorrichtung 1 gemäß Figur 1. Die Antriebe für die Drehbewegungen der Teile 3 sowie die Bearbeitungsstationen B₁-B₈ zur Durchführung von Bearbeitungsprozessen, im vorliegenden Fall die Bedruckungseinheiten und Inspektionseinheiten, werden von einer zentralen Steuereinheit 7 gesteuert. Die zentrale Steuereinheit 7 weist dabei ein nicht dargestelltes Mikroprozessorsystem auf. Zudem weist diese ebenfalls nicht dargestellte Anschlüsse in Form von Eingängen und Ausgängen zum Anschluss der einzelnen Komponenten der Vorrichtung 1 auf. Schließlich weist die zentrale Steuereinheit 7 einen nicht dargestellten Oszillator auf, mit welchem eine Leitfrequenz generiert wird. Die Leitfrequenz ist vorzugsweise parametrierbar. Besonders vorteilhaft kann die Leitfrequenz durch Frequenzteilung variiert werden.

Die in der zentralen Steuereinheit 7 generierte Leitfrequenz wird an die Antriebe und die Bearbeitungsstationen B₁-B₈ zu deren Synchronisierung ausgegeben. Eine derartige Synchronisierung der Bearbeitungsstationen B₁-B₈ auf die Antriebe ist erforderlich, damit die Teile 3 an der jeweiligen Bearbeitungsstation B₁-B₈ exakt in vorgegebene Drehpositionen positionierbar sind, in welchen dann mit der Bearbeitungsstation B₁-B₈ die jeweiligen Bearbeitungsprozesse durchgeführt werden.

Wie aus Figur 2 ersichtlich, ist die zentrale Steuereinheit 7 über erste Anschlussmittel 8 an eine Rechnereinheit 9 angeschlossen, welche zur Steuerung der Drehbewegungen der Teile 3 auf dem Rundtaktapparat 2 dient. Die Rechnereinheit weist analog zur zentralen Steuereinheit 7 ein Mikroprozessorsystem und eine Anordnung von Eingängen und Ausgängen auf.

An die Rechnereinheit sind über zweite Anschlussmittel 10a, 10b die Antriebe für die Drehbewegungen der Teile 3, die jeweils von einem Verstärker 11 und einem Motor 12 gebildet sind, sowie Inkrementalgeber 13 zur Erfassung der aktuellen Drehpositionen der jeweiligen Halterungen 4 für die Teile 3 angeschlossen.

Schließlich sind über dritte Anschlussmittel 14 die Bearbeitungsstationen B₁-B₈ an die zentrale Rechnereinheit 9 angeschlossen.

In einer ersten vorteilhaften Ausführungsform ist die Rechnereinheit 9 auf dem Rundtaktapparat 2 angeordnet und bewegt sich mit diesem mit. In diesem Fall können die zweiten Anschlussmittel 10a, 10b zur Kopplung der Rechnereinheit 9 mit den Antrieben und den Inkrementalgebern 13 von Kabeln gebildet sein, da auch die Antriebe und die Inkrementalgeber 13 mit dem Rundtaktapparat 2 mitbewegt werden.

Dagegen erfolgt zwischen der stationär angeordneten zentralen Steuereinheit 7 und der Rechnereinheit 9 über die ersten Anschlussmittel 8 eine berührungslose Datenübertragung. Die ersten Anschlussmittel 8 können in diesem Fall von Schleifringen, optischen Datenübertragungsstrecken oder dergleichen gebildet sein.

In einer zweiten Ausführungsform ist die Rechnereinheit 9 stationär angeordnet. In diesem Fall können die ersten Anschlussmittel 8 von Kabeln gebildet sein, während die zweiten Anschlussmittel 10a, 10b Datenübertragungsstrecken zur berührungslosen Übertragung von Daten bilden.

Die Antriebe zur Drehbewegung der Teile 3 werden in Abhängigkeit der Leitfrequenz gesteuert bzw. geregelt. Prinzipiell können hierzu die Antriebe geeignete Schrittmotoren aufweisen. Besonders vorteilhaft erfolgt eine Lageregelung der Antriebe in Abhängigkeit der von dem jeweiligen Inkrementalgeber 13 generierten Signale.

Zur Synchronisierung der Bearbeitungsstationen B₁-B₈ auf die Antriebe werden die Bearbeitungsprozesse der Bearbeitungsstationen B₁-B₈ ebenfalls durch die Vorgabe der Leitfrequenz gesteuert. Durch die zentrale Steuereinheit 7 werden dabei in Abhängigkeit der ermittelten Drehpositionen der jeweils zu bearbeitenden Teile 3 Startsignale berechnet und an die jeweilige Bearbeitungsstation B₁-B₈ zur Auslösung eines Bearbeitungsprozesses ausgegeben. Weiterhin wird die Dauer eines Bearbeitungsprozesses durch die zentrale Steuereinheit 7 dadurch vorgegeben, dass die Leitfrequenz nur für das entsprechende Zeitintervall in die betreffende Bearbeitungsstation B₁-B₈ eingegeben wird.

Bei einer als Inspektionseinheit ausgebildeten Bearbeitungsstation B₁-B₈ wird der Inspektionsvorgang der Teile 3 durch Vorgabe der Leitfrequenz gesteuert. Für den Fall, dass die Inspektionseinheit ein Bildverarbeitungssystem aufweist, dient die Leitfrequenz zur Triggerung der Bildaufnahme.

Zur Aufnahme von Standbildern werden mit der Leitfrequenz Zähler aktiviert und deaktiviert, wogegen bei der Aufnahme von bewegten Bildern die Leitfrequenz die Bildaufnahmefrequenz vorgibt. Generell können mit der Leitfrequenz auch weitere Inspektionseinheiten angesteuert werden, welche Stroboskope und dergleichen aufweisen.

Bei den als Bedruckungseinheiten ausgebildeten Bearbeitungsstationen B₁-B₈ werden die Bedruckungsprozesse in Abhängigkeit der Leitfrequenz gesteuert. Bei der Bedruckungseinheit mit der Druckwalze 5 wird deren Bewegung über die Leitfrequenz vorgegeben. Insbesondere dient diese zur Ansteuerung von Zählern, wobei in Abhängigkeit der Zählsignale der An- und Abdruck der Druckwalze 5 auf dem jeweiligen Teil 3 gesteuert wird.

Bei den berührungslos arbeitenden Bedruckungseinheiten werden die Tintenstrahl-Druckköpfe 6 in Abhängigkeit der Leitfrequenz gesteuert. Dabei ist die Leitfrequenz zweckmäßigerweise an die Ausgabefrequenz von Tintenstrahltröpfchen, der sogenannten Dot-Frequenz des Tintenstrahl-Druckkopfes 6 angepasst.

Dabei kann die Leitfrequenz zum einen so gewählt werden, dass diese gerade der Dot-Frequenz entspricht.

Zum anderen kann die Leitfrequenz auch höher als die Dot-Frequenz gewählt werden, wobei die Leitfrequenz beispielsweise um einen Faktor 2^{N} (N = 1,2..) höher ist als die Dot-Frequenz. Dadurch können insbesondere Offsetwerte der Bedruckungsvorgänge mit den verschiedenen Tintenstrahl-Druckköpfen 6 besser justiert werden. Für das o.g. Beispiel einer um 2^{N} höheren Leitfrequenz kann der Offset der Bedruckung mit zwei unterschiedlichen Farben, der mit zwei unterschiedlichen Tintenstrahl-Druckköpfen 6 durchgeführt wird, mit einer Auflösung von 1/2^{N} bezogen auf einen Dot, d.h. auf ein Tintenstrahltröpfchen, justiert werden.

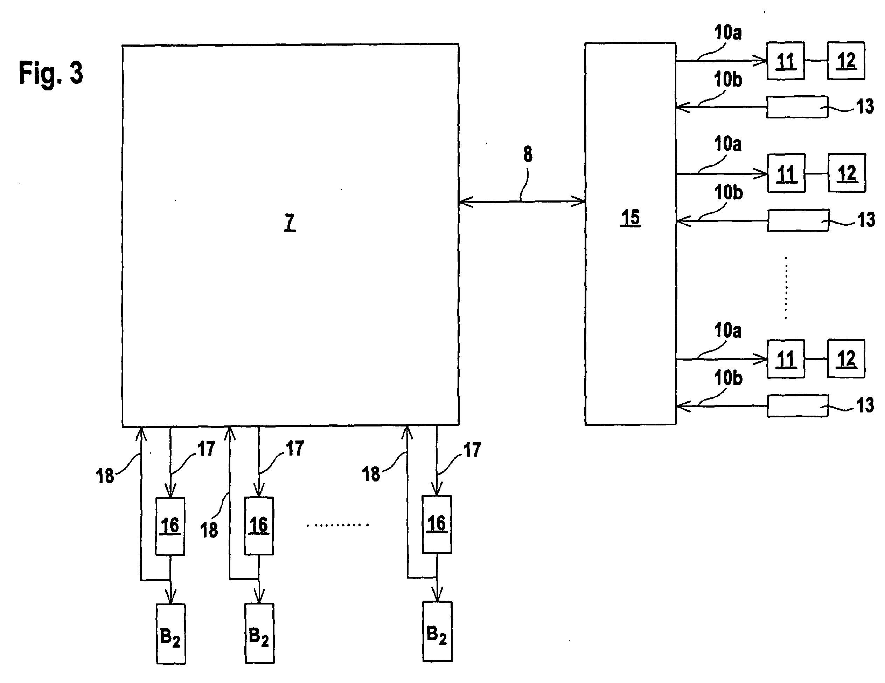

Figur 3 zeigt ein weiteres Beispiel der Komponenten für die Steuerung der Vorrichtung 1 gemäß der Figur 1. Die Komponenten weisen einen weitgehend vergleichbaren Aufbau und eine weitgehend analoge Funktion zum Ausführungsbeispiel gemäß Figur 2 auf.

Bei dem Ausführungsbeispiel gemäß Figur 3 ist die zentrale Steuereinheit 7 über die ersten Anschlussmittel 8 an eine Auswerteeinheit 15 angeschlossen, wobei diese einen der Rechnereinheit 9 entsprechenden Aufbau aufweist.

Analog zum Ausführungsbeispiel gemäß Figur 2 sind die Antriebe und Inkrementalgeber 13 über die zweiten Anschlussmittel 10a, 10b an die Auswerteeinheit 15 angeschlossen. In weiterer Übereinstimmung mit dem Ausführungsbeispiel gemäß Figur 2 kann die Auswerteeinheit 15 auf dem Rundtaktapparat 2 oder auch stationär angeordnet sein. Dementsprechend sind entweder die ersten Anschlussmittel 8 oder die zweiten Anschlussmittel 10a, 10b von berührungslos arbeitenden Datenübertragungsstrecken gebildet, wobei die jeweils anderen Anschlussmittel 10a, 10b, 8 von Kabeln gebildet sein können.

Die Antriebe für die Drehbewegungen der Teile 3 werden in Abhängigkeit der Signale der jeweiligen Inkrementalgeber 13 über die Auswerteeinheit 15 angesteuert. Vorzugsweise sind in der Auswerteeinheit 15 Lageregelkreise für die Ansteuerung der Antriebe integriert.

Die Signale der Inkrementalgeber 13 werden zudem in der Auswerteeinheit 15 fortlaufend erfasst und abgespeichert. Dabei erfolgt ein zyklisches und deterministisches Auslesen der Inkrementalgeber 13 derart, dass nicht nur die jeweiligen Positionswerte sondern auch die Erfassungszeiten der Positionswerte erfasst und in Datensätzen in der Auswerteeinheit 15 abgespeichert werden.

Aus diesen Datensätzen wird in der zentralen Steuereinheit 7 für jede Bearbeitungsstation B₁-B₈ ein individueller Takt generiert. Dabei wird in der zentralen Steuereinheit 7 zunächst erfasst, welches der Teile 3 an der jeweils anzusteuernden Bearbeitungsstation B₁-B₈ positioniert ist. Dann wird aus den Datensätzen für den Inkrementalgeber 13, welche diesem Teil 3 zugeordnet sind, ein Takt generiert, der den Signalen dieses Inkrementalgebers 13 folgt. Dadurch wird die Bearbeitungsstation B₁-B₈ synchron zu der Drehbewegung des jeweiligen Teiles 3 angesteuert. Da die Datensätze die Positionswerte und die Erfassungszeiten der Positionswerte des Inkrementalgebers 13 enthalten, ist dessen Bewegung vollständig erfasst, wobei insbesondere auch Schwankungen der Signale erfasst und berücksichtigt werden können.

Der in Abhängigkeit dieser Signale generierte individuelle Takt für die jeweilige Bearbeitungsstation B₁-B₈ gewährleistet somit einen exakt synchron zur Drehbewegung des Teiles 3 ablaufenden Bearbeitungsprozess.

Im vorliegenden Fall sind den einzelnen Bearbeitungsstationen B₁-B₈ Frequenzgeneratoren 16 vorgeordnet, die über Anschlussleitungen 17 an die zentrale Steuereinheit 7 angeschlossen sind. Die Ausgangssignale der Frequenzgeneratoren 16 werden über weitere Leitungen 18 in die zentrale Steuereinheit 7 zurückgelesen.

Der für eine Bearbeitungsstation B₁-B₈ generierte Takt besteht aus einer Folge von Zählimpulsen, die in dem jeweiligen Frequenzgenerator 16 in Abhängigkeit von in der zentralen Steuereinheit 7 generierten Steuerbefehlen erzeugt werden. Der Frequenzgenerator 16 steuert wiederum mit den Zählimpulsen den Bearbeitungsprozess in der nachgeordneten Bearbeitungsstation B₁-B₈ entsprechend dem Ausführungsbeispiel gemäß Figur 2.

Die rückgelesenen Ausgangssignale des Frequenzgenerators 16 werden vorteilhaft zur Korrektur von Fehlern verwendet, die durch Schwankungen in der Zykluszeit der zentralen Steuereinheit 7 oder durch bauteilbedingte Schwankungen der Ausgangssignale des Frequenzgenerators 16 entstehen können.

Dabei bilden die rückgelesenen Ausgangssignale eines Frequenzgenerators 16 Istwerte für einen Regelkreis, welche mit vorgegebenen Sollwerten in der zentralen Steuereinheit 7 verglichen werden. Die Abstände der in den Frequenzgeneratoren generierten Zählimpulse sind erheblich kleiner als die Zykluszeit der zentralen Steuereinheit 7.

### Bezugszeichenliste

- (1): Vorrichtung
- (2): Rundtaktapparat
- (3): Teil
- (4): Halterung
- (5): Druckwalze
- (6): Tintenstrahl-Druckkopf
- (7): Steuereinheit
- (8): erste Anschlussmittel
- (9): Rechnereinheit
- (10a, 10b): zweite Anschlussmittel
- (11): Verstärker
- (12): Motor
- (13): Inkrementalgeber
- (14): dritte Anschlussmittel
- (15): Auswerteeinheit
- (16): Frequenzgenerator
- (17): Anschlussleitung
- (18): Leitung

- B₁-B₈: Bearbeitungsstation

## Patentansprüche

1. Vorrichtung (1) zur Oberflächenbehandlung von Dosen (3), mit einer vorgegebenen Anzahl von Behandlungsprozessen durchführenden Behandlungsstationen (B₁ bis B₈) und mit einer Bewegungen ausführenden Fördereinheit, mittels derer die Dosen (3) in vorgegebene Sollpositionen an den Stationen (B₁ bis B₈) transportiert werden mit einer zentralen Steuereinheit (7), **dadurch gekennzeichnet, dass** mittels der Steuereinheit (7) die Bewegungen der Fördereinheit und die Prozesse der Behandlungsstationen (B₁ bis B₈) synchronisiert sind, indem über die zentrale Steuereinheit (7) für jede Station (B₁ bis B₈) ein mit der Bewegung der zu behandelnden Dose (3) korrelierter, den jeweiligen Behandlungsprozess steuernder Takt vorgegeben wird, wobei die Steuereinheit (7) ausgebildet ist, für die Übertragung des steuernden Taktes geeignete Startsignale zu generieren und die Dauer der Übertragung des steuernden Taktes vorzugeben und damit der Beginn und die Dauer des durchgeführten Bearbeitungsprozesses exakt vorgegeben wird, wobei durch die zentrale Steuereinheit (7) eine den Takt bildende Leitfrequenz vorgebbar ist und die Leitfrequenz an eine Rechnereinheit (9) zur Synchronisation der mit den Antrieben erzeugten Drehbewegungen und zur Steuerung der Behandlungsprozesse an die Behandlungsstationen (B₁ bis B₈) übertragen wird und wobei die Leitfrequenz an die Arbeitsfrequenzen der Behandlungsstationen (B₁ bis B₈) anpassbar ist und die Leitfrequenz an die eine Arbeitsfrequenz bildende Ausgabefrequenz von Tintenstrahltröpfchen eines Tintenstrahl-Druckkopfes (6) angepasst ist.

2. Vorrichtung (1) nach Anspruch 1, wobei eine vorgegebene Anzahl der Behandlungsstationen (B₁ bis B₈) jeweils von einer Bedruckungseinheit gebildet ist.

3. Vorrichtung (1) nach Anspruch 2, **dadurch gekennzeichnet, dass** wenigstens eine der Bedruckungseinheiten einen Tintenstrahl-Druckkopf (6) aufweist.

4. Vorrichtung (1) nach Anspruch 2; **dadurch gekennzeichnet, dass** wenigstens eine der Bedruckungseinheiten eine Druckwalze (5) aufweist.

5. Vorrichtung (1) nach Anspruch 1, **dadurch gekennzeichnet, dass** wenigstens eine Behandlungsstation (B₁ bis B₈) von einer Inspektionseinheit gebildet ist.

6. Vorrichtung (1) nach Anspruch 1, **dadurch gekennzeichnet, dass** mit dieser rotationssymmetrische Dosen (3) behandelt werden.

7. Vorrichtung (1) nach Anspruch 1 oder 6, **dadurch gekennzeichnet, dass** die rotationssymmetrischen Dosen (3) Getränkedosen sind.

8. Vorrichtung (1) nach Anspruch 1, **dadurch gekennzeichnet, dass** die Fördereinheit einen Rundtaktapparat (2) aufweist, auf welchem die rotationssymmetrischen Dosen (3) in Umfangsrichtung angeordnet sind und jeweils mittels eines Förderantriebs in eine Drehbewegung versetzbar sind.

9. Vorrichtung (1) nach Anspruch 8, **dadurch gekennzeichnet, dass** die rotationssymmetrischen Dosen (3) jeweils bezüglich ihrer Drehachse drehbar gelagert sind.

10. Vorrichtung (1) nach Anspruch 1, **dadurch gekennzeichnet, dass** die zentrale Steuereinheit (7) ausgebildet ist, Startsignale zu generieren, mittels derer individuell die Behandlungsprozesse der einzelnen Behandlungsstationen (B₁ bis B₈) gestartet werden.

11. Vorrichtung (1) nach Anspruch 1, **dadurch gekennzeichnet, dass** über die zentrale Steuereinheit (7) durch Vorgabe der Dauer der Übertragung des Taktes auf eine Behandlungsstation (B₁ bis B₈) die Dauer des Behandlungsprozesses für diese Behandlungsstation (B₁ bis B₈) vorgebbar ist.

12. Vorrichtung (1) nach Anspruch 1, **dadurch gekennzeichnet, dass** zur Erfassung der Drehposition der Dosen (3) jeweils ein Inkrementalgeber (13) vorgesehen ist.

13. Vorrichtung (1) nach Anspruch 12, **dadurch gekennzeichnet, dass** die Antriebe zur Erzeugung der Drehbewegungen in Abhängigkeit der Signale des Inkrementalgebers (13) lagegeregelt sind.

14. Vorrichtung (1) nach Anspruch 1, **dadurch gekennzeichnet, dass** die Leitfrequenz in der Steuereinheit (7) einstellbar ist.

15. Vorrichtung (1) nach Anspruch 1, **dadurch gekennzeichnet, dass** die Rechnereinheit (9) stationär angeordnet ist.

16. Vorrichtung (1) nach Anspruch 1, **dadurch gekennzeichnet, dass** die Rechnereinheit (9) auf dem Rundtaktapparat (2) angeordnet ist.

17. Vorrichtung (1) nach Anspruch 1, **dadurch gekennzeichnet, dass** die Leitfrequenz und die Signale der Inkrementalgeber (13) Eingangsgrößen für eine Lageregelung der oder der jeweiligen Antriebe bilden.

18. Vorrichtung (1) nach Anspruch 1, **dadurch gekennzeichnet, dass** in der zentralen Steuereinheit (7) für jede Behandlungsstation (B₁ bis B₈) ein individueller Takt für die Steuerung des jeweiligen Behandlungsprozesses generiert wird, wobei der Takt aus den zyklisch und aktuell erfassten Positionswerten und Erfassungszeiten der Positionswerte der Behandlungsbewegung der jeweils zu behandelnden Dose (3) abgeleitet ist.

19. Vorrichtung (1) nach Anspruch 18, **dadurch gekennzeichnet, dass** die mit den Inkrementalgebern (13) erfassten Positionswerte sowie die Erfassungszeiten der Positionswerte der Dose (3) in einer Auswerteeinheit (15) als Datensätze erfasst und abgespeichert werden.

20. Vorrichtung (1) nach Anspruch 19, **dadurch gekennzeichnet, dass** der Takt für eine Behandlungsstation (B₁ bis B₈) aus einer Folge von den Inkrementen des jeweiligen Inkrementalgebers (13) folgenden Zählimpulsen besteht, welche aus den in der Auswerteeinheit (15) abgespeicherten Datensätzen abgeleitet werden.

21. Vorrichtung (1) nach Anspruch 20, **dadurch gekennzeichnet, dass** die Zählimpulse jeweils in einem die jeweilige Behandlungsstation (B₁ bis B₈) steuernden Frequenzgenerator (16) generiert werden.

22. Vorrichtung (1) nach Anspruch 21, **dadurch gekennzeichnet, dass** die von einem Frequenzgenerator (16) generierten Ausgangssignale in die zentrale Steuereinheit (7) rückgelesen werden.

23. Vorrichtung (1) nach Anspruch 22, **dadurch gekennzeichnet, dass** in der zentralen Steuereinheit (7) Regelkreise zur Generierung der Zählimpulse vorgesehen sind, wobei die rückgelesenen Ausgangssignale der Frequenzgeneratoren (16) Istwerte der Regelkreise bilden.

24. Vorrichtung (1) nach Anspruch 20, **dadurch gekennzeichnet, dass** die Abstände der einzelnen Zählimpulse kleiner als die Zykluszeit der zentralen Steuereinheit (7) sind.

25. Verfahren zur Oberflächenbehandlung, insbesondere Bedruckung, von Dosen (3), mit einer vorgegebenen Anzahl von - Behandlungsprozessen durchführenden - Behandlungsstationen (B₁ bis B₈) und mit einer - Behandlungsbewegungen ausführenden - Fördereinheit, mit weicher die Dosen (3) in vorgegebene Sollpositionen an den Behandlungsstationen (B₁ bis B₈) transportiert werden, **dadurch gekennzeichnet, dass** eine zentrale Steuereinheit (7) die Behandlungsbewegungen der Fördereinheit und die Behandlungsprozesse der Behandlungsstationen (B₁ bis B₈) synchronisiert und wobei über die zentrale Steuereinheit (7) für jede Behandlungsstation (B₁ bis B₈) ein mit der Behandlungsbewegung der zu behandelnden Dose (3) korrelierter, den jeweiligen Behandlungsprozess steuernder Takt vorgegeben wird und wobei von der Steuereinheit (7) für die Übertragung des steuernden Taktes geeignete Startsignale generiert werden und die Dauer der Übertragung des steuernden Taktes vorgegeben wird und damit der Beginn und die Dauer des durchgeführten Bearbeitungsprozesses exakt vorgegeben wird, wobei durch die zentrale Steuereinheit (7) eine den Takt bildende Leitfrequenz vorgegeben wird und die Leitfrequenz an eine Rechnereinheit (9) zur Synchronisation der mit den Antrieben erzeugten Drehbewegungen und zur Steuerung der Behandlungsprozesse an die Behandlungsstationen (B₁ bis B₈) übertragen wird und wobei die Leitfrequenz an die Arbeitsfrequenzen der Behandlungsstationen (B₁ bis B₈) angepasst ist und die Leitfrequenz an die eine Arbeitsfrequenz bildende Ausgabefrequenz von Tintenstrahltröpfchen eines Tintenstrahl-Druckkopfes (6) angepasst ist.

## Claims

1. Device (1) for processing the surface of cans (3), with a predefined number of treatment stations (B₁ to B₈) performing treatment processes and with a conveying unit performing movements, by means of which the cans (3) are transported into predefined set positions at the stations (B₁ to B₈) with a central control unit (7), **characterised in that** by means of the control unit (7) the movements of the conveying unit and the processes of the treatment stations (B₁ to B₈) are synchronised, **in that** by means of the central control unit (7) for each station (B₁ to B₈) a cycle correlated with the movement of the can (3) to be treated and controlling the respective treatment process is provided, whereby the control unit (7) is designed to generate start signals suitable for transmitting the controlling cycle and define the duration of the transmission of the controlling cycle and in this way the beginning and the duration of the performed treatment process are defined exactly, whereby by means of the central control unit (7) a primary frequency forming the cycle can be defined and the primary frequency is transmitted to a computer unit (9) for synchronisation of the rotary movements generated by the drives and for controlling the treatment processes at the treatment stations (B₁ to B₈), and wherein the primary frequency can be adjusted to the operating frequencies of the treatment stations (B₁ to B₈) and the primary frequency is adjusted to the output frequency forming an operating frequency of inkjet droplets of an inkjet printing head (6).

2. Device (1) according to claim 1, **characterised in that** a predetermined number of treatment stations (B₁ to B₈) is formed respectively by a printing unit.

3. Device (1) according to claim 2, **characterised in that** at least one of the printing units comprises an inkjet printing head (6).

4. Device (1) according to claim 2, **characterised in that** at least one of the printing units comprises a print roller (5).

5. Device (1) according to claim 1, **characterised in that** at least one treatment station (B₁ to B₈) is formed by an inspection unit.

6. Device (1) according to claim 1, **characterised in that** the latter is used for treating rotationally symmetrical cans (3).

7. Device (1) according to claim 1 or 6, **characterised in that** the rotationally symmetrical cans (3) are drinks cans.

8. Device (1) according to claim 1, **characterised in that** the conveying unit comprises a rotary cycle apparatus (2), on which the rotationally symmetrically cans (3) are arranged in circumferential direction and can each be set into rotation by means of a conveying drive.

9. Device (1) according to claim 8, **characterised in that** the rotationally symmetrical cans (3) are each rotationally mounted with respect to their axis of rotation.

10. Device (1) according to claim 1, **characterised in that** the central control unit (7) is designed to generate start signals, by means of which the treatment processes of the individual treatment stations (B₁ to B₈) are started individually.

11. Device (1) according to claim 1, **characterised in that** by means of the central control unit (7) by predetermining the duration of the transmission of the cycle to a treatment station (B₁ to B₈), the duration of the treatment process for this treatment station (B1 to B₈) can be predetermined.

12. Device (1) according to claim 1, **characterised in that** an incremental encoder (13) is provided for detecting the rotary position of the cans (3).

13. Device (1) according to claim 12, **characterised in that** the drives for generating the rotary movements are controlled in their position as a function of the signals of the incremental encoder (13).

14. Device (1) according to claim 1, **characterised in that** the primary frequency in the control unit (7) can be adjusted.

15. Device (1) according to claim 1, **characterised in that** the computer unit (9) is arranged to be stationary.

16. Device (1) according to claim 1, **characterised in that** the computer unit (9) is arranged on the rotary cycle apparatus (2).

17. Device (1) according to claim 1, **characterised in that** the primary frequency and the signals of the incremental encoders (13) constitute input variables for the position control of the respective drives.

18. Device (1) according to claim 1, **characterised in that** in the central control unit (7) for each treatment station (B₁ to B₈) an individual cycle for controlling the respective treatment process is generated, whereby the cycle is derived from the cyclically and currently determined position values and detecting times of the position values of the treatment movement of the respective can (3) to be treated.

19. Device (1) according to claim 18, **characterised in that** the position values and the detection times of the position values of the can (3) detected by the incremental encoders (13) are recorded in an evaluation unit (15) as data sets and stored.

20. Device (1) according to claim 19, **characterised in that** the cycle for a treatment station (B₁ to B₈) consists of a sequence of counting pulses following the increments of the respective incremental encoder (13), which are derived from the data sets stored in the evaluation unit (15).

21. Device (1) according to claim 20, **characterised in that** the counting pulses are generated respectively in a frequency generator (16) controlling the respective treatment station (B₁ to B₈).

22. Device (1) according to claim 21, **characterised in that** the output signals generated by said frequency generator (16) are re-read into the central control unit (7).

23. Device (1) according to claim 22, **characterised in that** control loops for generating the counting pulses are provided in the central control unit (7), whereby the re-read output signals of the frequency generators (16) constitute actual values of said control loops.

24. Device (1) according to claim 20, **characterised in that** the intervals of the individual counting pulses are shorter than the cycle time of the central control unit (7).

25. Method for processing, in particular printing the surface of cans (3), with a predefined number of treatment stations (B₁ to B₈) performing treatment processes and with a conveying unit performing movements, by means of which the cans (3) are transported into predefined set positions at the stations (B₁ to B₈) with a central control unit (7), **characterised in that** by means of the control unit (7) the movements of the conveying unit and the processes of the treatment stations (B₁ to B₈) are synchronised, **in that** by means of the central control unit (7) for each station (B₁ to B₈) a cycle correlated with the movement of the can (3) to be treated and controlling the respective treatment process is provided, whereby the control unit (7) is designed to generate start signals suitable for transmitting the controlling cycle and define the duration of the transmission of the controlling cycle and in this way the beginning and the duration of the performed treatment process is defined exactly, whereby by means of the central control unit (7) a primary frequency forming the cycle can be defined and the primary frequency is transmitted to a computer unit (9) for synchronisation of the rotary movements generated by the drives and for controlling the treatment processes at the treatment stations (B₁ to B₈) and wherein the primary frequency can be adjusted to the operating frequencies of the treatment stations (B₁ to B₈) and the primary frequency is adjusted to the
output frequency forming an operating frequency of inkjet droplets of an inkjet printing head (6).

## Revendications

1. Dispositif (1) de traitement de surface de boîtes (3), présentant un nombre prédéfini de stations (B₁ à B₈) de traitement mettant en oeuvre des processus de traitement et une unité d'acheminement exécutant des déplacements permettant de transporter les boîtes (3) en des positions théoriques prédéfinies dans les stations (B₁ à B₈) au moyen d'une unité (7) de commande centrale, **caractérisé en ce que** les déplacements de l'unité d'acheminement et les processus des stations (B₁ à B₈) de traitement sont synchronisés au moyen de l'unité (7) de commande, un cycle de commande du processus de traitement respectif, en corrélation avec le déplacement de la boîte (3) à traiter, est prédéfini par l'intermédiaire de l'unité (7) de commande centrale pour chaque station (B₁ à B₈), l'unité (7) de commande étant configurée pour générer des signaux de démarrage appropriés pour la transmission du cycle de commande et pour définir de manière précise le début et la durée du processus de traitement mis en oeuvre, une fréquence pilote formant le cycle pouvant être prédéfinie par l'unité (7) de commande centrale et la fréquence pilote étant transmise à une unité (9) de calcul pour la synchronisation des déplacements rotatifs produits par les entraînements et aux stations (B₁ à B₈) de traitement pour la commande des processus de traitement, la fréquence pilote pouvant être adaptée aux fréquences effectives des stations (B₁ à B₈) de traitement et étant adaptée à la fréquence de sortie, formant une fréquence effective, de gouttelettes de jet d'encre d'une tête (6) d'impression à jet d'encre.

2. Dispositif (1) selon la revendication 1, dans lequel un nombre prédéfini de stations (B₁ à B₈) de traitement est formé respectivement par une unité d'impression.

3. Dispositif (1) selon la revendication 2, **caractérisé en ce qu'**au moins une des unités d'impression présente une tête (6) d'impression à jet d'encre.

4. Dispositif (1) selon la revendication 2, **caractérisé en ce qu'**au moins une des unités d'impression présente un cylindre (5) d'impression.

5. Dispositif (1) selon la revendication 1, **caractérisé en ce qu'**au moins une station (B₁ à B₈) de traitement est formée par une unité d'inspection.

6. Dispositif (1) selon la revendication 1, **caractérisé en ce que** des boîtes (3) à symétrie de révolution sont traitées par celle-ci.

7. Dispositif (1) selon la revendication 1 ou 6, **caractérisé en ce que** les boîtes (3) à symétrie de révolution sont des boîtes de boisson.

8. Dispositif (1) selon la revendication 1, **caractérisé en ce que** l'unité d'acheminement présente un appareil (2) à mouvement cadencé circulaire, sur lequel les boîtes (3) à symétrie de révolution sont agencées dans le sens de la périphérie et peuvent être déplacées respectivement au moyen d'un entraînement d'acheminement suivant un mouvement rotatif.

9. Dispositif (1) selon la revendication 8, **caractérisé en ce que** les boîtes (3) à symétrie de révolution sont logées de manière rotative respectivement par rapport à leur axe de rotation.

10. Dispositif (1) selon la revendication 1, **caractérisé en ce que** l'unité (7) de commande centrale est configurée de manière à générer des signaux de démarrage, au moyen desquels les processus de traitement des différentes stations (B₁ à B₈) de traitement sont démarrés individuellement.

11. Dispositif (1) selon la revendication 1, **caractérisé en ce que** la durée du processus de traitement pour une station (B₁ à B₈) de traitement peut être prédéfinie par l'intermédiaire de l'unité (7) de commande centrale par une indication de la durée de la transmission du cycle à cette station (B₁ à B₈) de traitement.

12. Dispositif (1) selon la revendication 1, **caractérisé en ce qu'**un transmetteur incrémental (13) est à chaque fois prévu pour détecter la position rotative des boîtes (3).

13. Dispositif (1) selon la revendication 12, **caractérisé en ce que** le positionnement des entraînements destinés à générer les déplacements rotatifs est réglé en fonction des signaux du transmetteur incrémental (13).

14. Dispositif (1) selon la revendication 1, **caractérisé en ce que** la fréquence pilote est réglable dans l'unité (7) de commande.

15. Dispositif (1) selon la revendication 1, **caractérisé en ce que** l'unité (9) de calcul est agencée de manière stationnaire.

16. Dispositif (1) selon la revendication 1, **caractérisé en ce que** l'unité (9) de calcul est agencée sur l'appareil (2) à mouvement cadencé circulaire.

17. Dispositif (1) selon la revendication 1, **caractérisé en ce que** la fréquence pilote et les signaux du transmetteur incrémental (13) constituent des grandeurs d'entrée pour un réglage de positionnement des entraînements ou des entraînements respectifs.

18. Dispositif (1) selon la revendication 1, **caractérisé en ce qu'**un cycle individuel pour la commande du processus de traitement respectif est généré dans l'unité (7) de commande centrale pour chaque station (B₁ à B₈) de traitement, le cycle étant déduit des valeurs de position détectées cycliques et courantes et des temps de détection des valeurs de position du déplacement relatif au traitement de la boîte (3) à traiter.

19. Dispositif (1) selon la revendication 18, **caractérisé en ce que** les valeurs de position détectées au moyen des transmetteurs incrémentaux (13), ainsi que les temps de détection des valeurs de position de la boîte (13) dans une unité (15) d'évaluation sont détectés et enregistrés sous la forme d'ensembles de données.

20. Dispositif (1) selon la revendication 19, **caractérisé en ce que** le cycle pour une station (B₁ à B₈) de traitement est constitué d'une suite d'impulsions de comptage suivant les incréments du transmetteur incrémental (13) respectif, qui sont déduits des ensembles de données enregistrés dans l'unité (15) d'évaluation.

21. Dispositif (1) selon la revendication 20, **caractérisé en ce que** les impulsions de comptage sont générées respectivement dans un générateur (16) de fréquences commandant la station (B₁ à B₈) de traitement respective.

22. Dispositif (1) selon la revendication 21, **caractérisé en ce que** les signaux de sortie générés par un générateur (16) de fréquences sont relus dans l'unité (7) de commande centrale.

23. Dispositif (1) selon la revendication 22, **caractérisé en ce que** des circuits de réglage sont prévus dans l'unité (7) de commande centrale pour générer les impulsions de comptage, les signaux de sortie relus des générateurs (16) de fréquences constituant des valeurs réelles des circuits de réglage.

24. Dispositif (1) selon la revendication 20, **caractérisé en ce que** les intervalles entre les différentes impulsions de comptage sont inférieurs au temps de cycle de l'unité (7) de commande centrale.

25. Procédé de traitement de surface, en particulier impression de boîtes (3), présentant un nombre prédéfini de stations (B₁ à B₈) de traitement mettant en oeuvre des processus de traitement et une unité d'acheminement exécutant des déplacements pour le traitement, permettant de transporter les boîtes (3) en des positions théoriques prédéfinies dans les stations (B₁ à B₈) de traitement, **caractérisé en ce qu'**une unité (7) de commande centrale synchronise les déplacements pour le traitement de l'unité d'acheminement et les processus de traitement des stations (B₁ à B₈) de traitement, un cycle de commande du processus de traitement respectif, en corrélation avec le déplacement pour le traitement de la boîte (3) à traiter, est prédéfini par l'intermédiaire de l'unité (7) de commande centrale pour chaque station (B₁ à B₈) de traitement, l'unité (7) de commande générant des signaux de démarrage appropriés pour la transmission du cycle de commande et prédéfinissant la durée de la transmission du cycle de commande, le début et la durée du processus de traitement mis en oeuvre étant ainsi prédéfinis de manière précise, une fréquence pilote formant le cycle pouvant être prédéfinie par l'unité (7) de commande centrale et la fréquence pilote étant transmise à une unité (9) de calcul pour la synchronisation des déplacements rotatifs produits par les entraînements et aux stations (B₁ à B₈) de traitement pour la commande des processus de traitement, la fréquence pilote pouvant être adaptée aux fréquences effectives des stations (B₁ à B₈) de traitement et étant adaptée à la fréquence de sortie, formant une fréquence effective, de gouttelettes de jet d'encre d'une tête (6) d'impression à jet d'encre.
